# EUROPÄISCHE PATENTSCHRIFT

(11) **EP 1 811 880 B1**
(45) Veröffentlichungstag und Bekanntmachung des Hinweises auf die Patenterteilung: **25.08.2010**
(21) Anmeldenummer: 05810585.9
(22) Anmeldetag: 31.10.2005
(51) Int. Cl.: A47J 31/40

(54) **SYSTEM MIT EINER KAFFEEMASCHINE UND EINER PORTIONSKAPSEL**
SYSTEM COMPRISING A COFFEE MACHINE AND A PORTION CAPSULE
SYSTEME COMPRENANT UNE MACHINE A CAFE ET UNE CAPSULE CONTENANT UNE PORTION DE PRODUIT

(30) Priorität: 19.11.2004 DE 102004056224
(43) Veröffentlichungstag der Anmeldung: 01.08.2007
(73) Patentinhaber: Tchibo GmbH, 22297 Hamburg (DE)
(72) Erfinder: TERNITE, Rüdiger, 21149 Hamburg (DE)
(74) Vertreter: UEXKÜLL & STOLBERG
(86) Internationale Anmeldenummer: PCT/EP2005/011666
(87) Internationale Veröffentlichungsnummer: WO 2006/053635

(56) Entgegenhaltungen:
- WO-A-2004/098360
- US-A- 4 136 202
- US-A1- 2003 172 813

## Beschreibung

Die Erfindung betrifft eine Kaffeemaschine sowie ein System mit einer Kaffeemaschine und einer Portionskapsel.

Aus der EP 0 904 717 B1 ist eine Kaffeemaschine bekannt, mit deren Hilfe sich einzelne Kaffeeportionen (eine Tasse oder zwei Tassen Kaffee) aufbrühen lassen. Diese Maschine wird mit vorgefertigten Kaffeeportionen verwendet, bei denen sich gemahlener Kaffee zwischen zwei Filterpapierlagen befindet, die entlang eines gemeinsamen kreisförmigen Randes miteinander verbunden sind.

Auch zum Brühen von Espresso mittels einer Espressomaschine werden vorgefertigte Kaffeeportionen verwendet.

Die WO 2004/098360 A1 zeigt eine Brühmaschine, die ebenfalls für die Verwendung mit vorgefertigten Kaffeeportiononen konstruiert ist, die von Filterpapier umhüllt sind. Diese Maschine kann mit zwei verschiedenen Drücken betrieben werden.

In der. EP 1 344 722 A1 ist eine Portionskapsel mit einem Kapseldeckel und einem Kapselboden beschrieben, die im Lieferzustand allseitig geschlossen ist und eine partikelförmige, mittels Wasser extrahierbare Kaffeesubstanz enthält. Dabei ist zwischen dem Kapseldeckel und der Kaffeesubstanz eine Verteilereinrichtung und zwischen der Kaffeesubstanz und dem Kapselboden eine Sammeleinrichtung angeordnet. Die Verteilereinrichtung sowie die Sammeleinrichtung weisen jeweils eine Anzahl von Öffnungen und Prägungen zur Bildung von Flüssigkeitskanälen auf. Diese Portionskapsel wird in einer Kaffeemaschine verwendet, wobei der Kapseldeckel und der Kapselboden perforiert werden. Durch eine Öffnung im Kapseldeckel gelangt heißes Wasser auf die Verteilereinrichtung und wird davon im Wesentlichen gleichmäßig verteilt, sodass die Kaffeesubstanz in der Portionskapsel weitgehend gleichmäßig extrahiert werden kann. Das fertige Getränk wird von der Sammeleinrichtung zu einer Öffnung im Kapselboden geleitet, wo es aus der Portionskapsel austritt und von einem Gefäß (z.B. einer Tasse) aüfgefangen werden kann.

Die vorbekannten Möglichkeiten sind im Wesentlichen zum Brühen nur einer bestimmten Art von Kaffeegetränk eingerichtet, z.B. zum Brühen von Kaffee mit einer Schaumschicht oder zum Brühen von Espresso.

Es ist Aufgabe der Erfindung, eine Möglichkeit zum Brühen einer Getränkeportion (insbesondere einer Kaffeeportion und insbesondere für eine Tasse oder für wenige Tassen) zu schaffen, die sich in Bezug auf die Auswahl eines Getränks durch hohe Variabilität auszeichnet und außerdem kostengünstig ist.

Diese Aufgabe wird gelöst durch eine Kaffeemaschine mit den Merkmalen des Anspruchs 1 sowie durch ein System mit einer derartigen Kaffeemaschine und einer Portionskapsel mit den Merkmalen des Anspruchs 12. Vorteilhafte Ausgestaltungen der Erfindung ergeben sich aus den Unteransprüchen.

Das erfindungsgemäße System enthält eine Kaffeemaschine und eine Portionskapsel. Die Kaffeemaschine ist zum Brühen eines heißen Getränks, insbesondere eines heißen Kaffeegetränks, mittels einer Portionskapsel mit einem Kapseldeckel und einem Kapselboden eingerichtet und weist eine Druckwassereinrichtung, einen Pörtionskapselhalter und eine Steuerung auf. Dem Portionskapselhalter sind zwei relativ zueinander bewegbare Aufstechmittel zugeordnet, die dazu eingerichtet sind, beim oder nach dem Einsetzen der Portionskapsel in den Portionskapselhalter den Kapseldeckel sowie den Kapselboden zu durchstoßen. Dadurch kann heißes Wasser durch den Kapseldeckel in den Innenraum der Portionskapsel und Getränk durch den Kapselboden aus der Portionskapsel gelangen. Die Steuerung der Kaffeemaschine ist zum Bereitstellen mindestens drei verschiedener Drücke für das Druckwasser eingerichtet, und zwar vorzugsweise zum Bereitstellen von drei Drücken, die zum Brühen von Espresso, Caffè Crema sowie Filterkaffee vorgesehen sind. Dafür besonders geeignete Drücke liegen im Bereich von etwa 13 bar bis 18 bar (vorzugsweise 14 bar bis 16 bar) (Espresso), etwa 9 bar bis 13 bar (vorzugsweise 10 bar bis 12 bar) (Caffè Crema) bzw. etwa 3 bar bis 9 bar (vorzugsweise 5 bar bis 7 bar) (Filterkaffee).

Die Portionskapsel hat einen Kapseldeckel und einen Kapselboden, ist im Lieferzustand allseitig geschlossen und enthält eine partikelförmige, mittels Wasser extrahierbare Getränkesubstanz, vorzugsweise eine Kaffeesubstanz. Zwischen dem Kapseldeckel und der Getränkesubstanz ist eine Verteilereinrichtung und/oder zwischen der Getränkesubstanz und dem Kapselboden ist eine Sammeleinrichtung angeordnet. Die Verteilereinrichtung bzw. die Sammeleinrichtung ist mit einer Anzahl von Öffnungen und vorzugsweise mit Prägungen zur Bildung von Flüssigkeitskanälen versehen. Eine derartige Portionskapsel ist im Prinzip aus der EP 1 344 722 A1 bekannt.

Die Kaffeemaschine des erfindungsgemäßen Systems ermöglicht trotz einer relativ einfachen und kostengünstigen Konstruktion das Brühen u.a. ganz verschiedenartiger Kaffeegetränke, insbesondere das Brühen von Espresso oder Caffè Crema oder Filterkaffee. Dies wird durch eine Druckwassereinrichtung (z.B. mit einer steuerbaren Pumpe und einem Boiler) erreicht, die mittels einer Steuerung verschiedene Drücke oder Druckbereiche bereitstellen kann, wie sie für das jeweilige Kaffeegetränk optimal sind. Unter "Kaffeegetränk" ist hier ganz allgemein ein kaffeehaltiges Getränk zu verstehen.

Der hier angesprochene Druck ist der Druck, der im Betrieb der Kaffeemaschine über dem Kapseldeckel herrscht, also im wesentlichen der Druck, der längs der Portionskapsel abfällt, während heißes Wasser und Getränkeextrakt dort hindurchströmen. Dieser Druckwert könnte direkt gemessen und der Steuerung zur Verfügung gestellt werden, so dass die Steuerung den Druck z.B. mit Hilfe eines ansteuerbaren Ventils regeln kann. In einer bevorzugten Ausführungform erfolgt jedoch keine direkte Messung des Drucks. Statt dessen wird der von einer steuerbaren Pumpe geförderte Volumenstrom des zum Brühen verwendeten Wassers mit Hilfe eines Durchflussmessers bestimmt und von der Steuerung zum Regeln der Pumpenleistung verwendet. Dabei stellt sich über dem Kapseldeckel ein Druck ein, der sich aus der Pumpenkennlinie und dem Strömungswiderstand im System ergibt. Der Strömungswiderstand hängt maßgeblich von dem Strömungswiderstand in der Portionskapsel ab, also z.B. von dem Mahlgrad einer darin befindlichen Kaffeesubstanz, vom Füllgrad und von den Eigenschaften der Verteiler- und der Sammeleinrichtung. Für vorgegebene oder typische Portionskapseln lassen sich die für die Steuerung maßgeblichen Parameter werksseitig durch Kalibrierungsmessungen bestimmen und in der Steuerungselektronik abspeichern.

Vorzugsweise ist die Getränkesubstanz in der Portionskapsel zum Brühen von Espresso oder von Caffè Crema oder von Filterkaffee vorgesehen. Optional können weitere Substanzen in der Portionskapsel enthalten sein, auch Substanzen wie Zucker, Süßstoff oder Milchpulver. Durch Auswahl der geeigneten Sorte von Portionskapsel lässt sich ein und dieselbe Kaffeemaschine in unkomplizierter Weise für ganz unterschiedliche Arten von Kaffeegetränken und auch anderen heißen Getränken nutzen. Ferner können die Verteilereinrichtung und/oder die Sammeleinrichtung der Portionskapsel für die in der Portionkapsel enthaltene Getränkesubstanz optimiert sein. So lässt sich z.B. die Schaumbildung bei Caffè Crema durch die Gestaltung der Verteilereinrichtung und/oder der Sammeleinrichtung verbessern, wenn diese Gestaltung auf die Verwirbelung des Heißwassers in der Portionskapsel im mittleren Druckbereich abgestimmt ist. Die Portionskapsel hat zudem den Vorteil, dass die Getränkesubstanz bzw. Kaffeesubstanz darin lange frisch bleibt, insbesondere wenn die Wandungen der Portionskapsel aus aromadichtem und quasi sauerstoffundurchlässigem Material bestehen. Ferner ist die Handhabung mit der Kaffeemaschine ganz einfach, da z.B. nicht zunächst in umständlicher Weise der Kapseldeckel von der Portionskapsel abgezogen werden muss, sondern die Portionskapsel als Ganzes in den Portionskapselhalter eingesetzt wird und dabei oder danach von den Aufstechmitteln durchstochen wird, um die zum Brühen des Getränks erforderlichen Öffnungen zu schaffen.

Wie schon angedeutet, kann die Getränkesubstanz in der Portionskapsel auch zum Zubereiten anderer heißer Getränke geeignet sein, wozu die Portionskapsel z.B. Tee, Schokolade, Instantsuppe oder Milchpulver enthält. Hierbei können auch Zusatzstoffe wie z.B. Zucker oder Süßstoff mit enthalten sein. Ferner ist eine Portionskapsel mit flüssiger Milch für die Zubereitung der Milchschaumkrone auf Cappuccino praktisch, wie weiter unten erläutert wird. Wenn die Maschine des erfindungsgemäßen Systems ausschließlich zur Zubereitung nicht kaffeehaltiger Getränke verwendet werden soll, ist die Bezeichnung "Kaffeemaschine" streng genommen nicht korrekt; sie wird aber der Einfachheit halber beibehalten.

Bei einer bevorzugten Ausführungsform weist mindestens eines der beiden Aufstechmittel einen hohlen Dorn mit einer Spitze auf, die mit mindestens einer Öffnung versehen ist. Vorzugsweise hat jedes der beiden Aufstechmittel genau einen Dorn, der zentral in Bezug auf den Kapseldeckel bzw. den Kapselboden einer Portionskapsel angeordnet sein kann. Ausführungsformen mit genau einem Dorn sind technisch einfach und daher vorteilhaft. Dabei sorgen innerhalb einer Portionskapsel die Verteilereinrichtung und die Sammeleinrichtung für eine gleichmäßige Verteilung des Heißwassers in der Getränkesubstanz bzw. für eine Zuleitung des Getränks auf den dem Kapselboden zugeordneten Dorn.

Die Kaffeemaschine weist vorzugsweise eine Anlagefläche auf, relativ zu der der Portionskapselhalter bewegbar ist und von der vorzugsweise die dem Kapseldeckel zugeordneten Aufstechmittel vorstehen. Bei dieser Ausgestaltung kann der Portionskapselhalter von der Anlagefläche weg bewegt werden, um eine Portionskapsel einzusetzen. Anschließend wird der Portionskapselhalter auf die Anlagefläche zu bewegt, wobei die dem Kapseldeckel zugeordneten Aufstechmittel (also z.B. ein zentraler Dorn) den Kapseldeckel perforieren.

Der Portionskapselhalter lässt sich bei einer vorteihaften Gestaltung von der übrigen Kaffeemaschine abnehmen. Dabei kann die Kaffeemaschine eine bewegbare Halteeinrichtung aufweisen, die zur Aufnahme des Portionskapselhalters eingerichtet ist und mit der der Portionskapselhalter auf die Anlagefläche zu bzw. von der Anlagefläche weg bewegbar ist. Bei dieser Gestaltung ist der Portionkapselhalter ganz leicht zugänglich und kann bei Bedarf separat gespült werden.

Vorzugsweise weist die Kaffeemaschine eine umlaufende Dichtung auf, die bei eingesetzter Portionskapsel an den Rand des Kapseldeckels anlegbar ist. Diese Dichtung kann z.B. an der Anlagefläche angeordnet sein und verhindert, dass heißes Wasser, das sich während des Brühvorgangs oberhalb des Kapseldeckels ansammeln könnte, außen an der Portionskapsel vorbeiläuft und dabei das frisch gebrühte Getränk verwässert. Außerdem sorgt diese Dichtung dafür, dass der von der Druckwassereinrichtung gelieferte Druck bis ins Innere der Portionskapsel reicht.

Bei einer bevorzugten Ausführungsform weist der Portionskapselhalter einen zur Aufnahme einer Portionskapsel eingerichteten Einsatz auf, der in einer Halterung gegen Federdruck in Richtung auf das dem Kapselboden zugeordnete Aufstechmittel zu verschiebbar gelagert ist. Dabei ist dieses Aufstechmittel an der Halterung befestigt. Vorzugsweise umgibt der Einsatz das Aufstechmittel (also z.B. einen zentralen Dorn), so dass der Benutzer vor einer Verschiebung des Einsatzes auf das Aufstechmittel zu vor Verletzungen durch das Aufstechmittel geschützt ist. Wenn die Portionskapsel in einen derartigen Portionskapselhalter eingesetzt wird und anschließend der Portionskapselhalter z.B. auf die Anlagefläche zu bewegt wird, wird die Halterung gegen Federdruck nach unten verschoben, sodass das Aufstechmittel den Kapselboden durchdringt oder vorschädigt.

Es kann vorteilhaft sein, wenn der Kapselboden beim Einsetzen der Portionskapsel noch nicht sofort durchstoßen wird, sondern erst nach dem Einsetzen der Portionskapsel bei einem Druckaufbau in der Portionskapsel. Dies gilt insbesondere für das Brühen von Espresso. Der Druckaufbau entsteht, nachdem Druckwasser in den Innenraum der Portionskapsel eingedrungen ist. Dabei wölbt sich der gegebenenfalls vorgeschädigte Kapselboden nach außen, bis er von dem Aufstechmittel durchstoßen wird. Die Länge des Aufstechmittels muss also auf die bei dem vorgegebenen Druckbereich zu erwartende Wölbung des Kapselbodens abgestimmt sein. Die durch diese Ausgestaltung bedingte Verzögerung beim Austritt des Getränks führt zu einer Aromaverbesserung, da das Druckwasser eine längere Einwirkzeit auf die Getränkesubstanz hat. Vorzugsweise wird der Kapselboden beim Einsetzen der Portionskapsel und Andrücken des Portionskapselhalters an die oben erwähnte Anlagefläche vorgeschädigt, so dass der Druckanstieg in der Portionskapsel ausreicht, damit das Aufstechmittel den Kapselboden perforieren kann.

Der Portionskapselhalter weist vorzugsweise einen Sammelraum für das aus der Portionskapsel austretende Getränk auf, der mit einem Getränkeauslauf verbunden ist. Dabei ist die Kaffeemaschine in vorteilhafter Weise so gestaltet, dass unter den Getränkeauslauf ein Gefäß, z.B. eine Tasse oder auch eine Kanne, gesetzt werden kann, um das austretende Getränk aufzunehmen.

Wenn das Druckwasser einen hohen Druck hat, insbesondere beim Brühen von Espresso, ist bereits bei der aus der EP 1 344 722 A1 bekannten Portionskapsel die Wölbung des Kapselbodens so stark, dass das dem Kapselboden zugeordnete Aufstechmittel den Kapselboden perforieren kann. Wenn dagegen Filterkaffee gebrüht werden soll, ist es vorteilhaft, wenn die zugehörige Portionskapsel an ihrem Kapselboden eine Sollschwachstelle aufweist, z.B. ein im zentralen Bereich des Kapselbodens an dessen Innenseite oder Außenseite über einer Öffnung aufgeklebtes oder aufgesiegeltes Folienstück, das aus dünnerem Material (z.B. Aluminium- oder Kunststofffolie) besteht als der übrige Kapselboden. In diesem Fall wird die Sollschwachstelle bereits beim Einsetzen der Portionskapsel bzw. beim Arretieren des Portionskapselhalters von dem Aufstechmittel perforiert, so dass es beim Brühen von Filterkaffee nicht zu einem unerwünschten Druckaufbau in der Portionkapsel kommt. Ähnliches gilt für das Brühen von Caffe Crema.

Im Folgenden wird die Erfindung anhand eines Ausführungsbeispiels näher erläutert. Die Zeichnungen zeigen in
- Figur: 1 eine schematische Darstellung (mit einem Wasserlauf- plan) einer Kaffeemaschine gemäß dem erfindungsgemäßen System,
- Figur 2: einen schematischen Längsschnitt durch eine Portions- kapsel des erfindungsgemäßen Systems,
- Figur 3: einen Längsschnitt durch eine Ausführungsform des Por- tionskapselhalters der Kaffeemaschine mit eingesetzter Portionskapsel in Ausgangsposition und
- Figur 4: einen Längsschnitt ähnlich wie in Figur 3, nachdem der Portionskapselhalter in Brühposition bewegt worden ist.

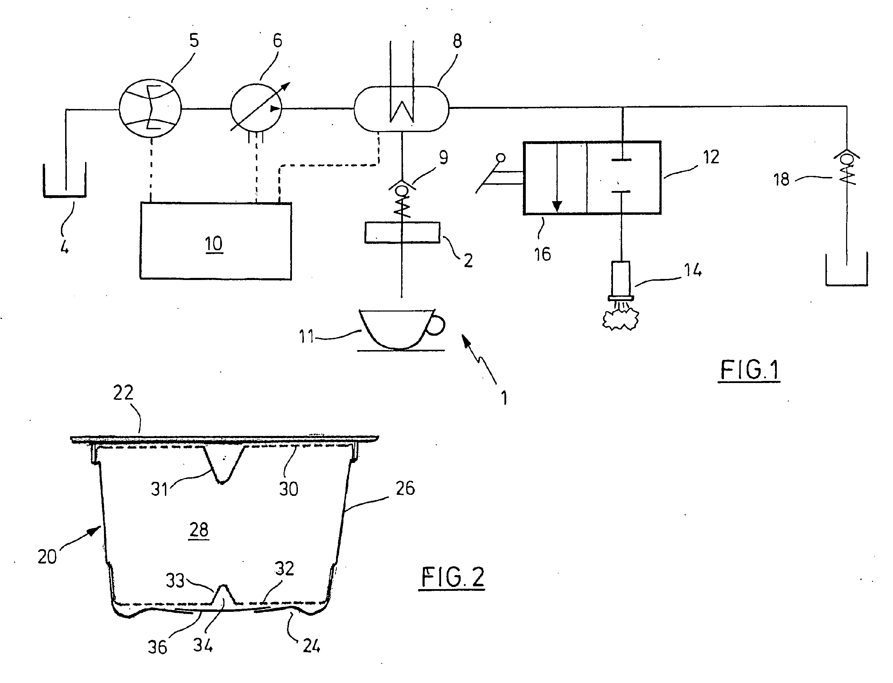

In Figur 1 ist eine Kaffeemaschine 1 in stark schematischer Weise dargestellt, wobei ihre Funktionsweise anhand eines Wasserlaufplans erläutert wird.

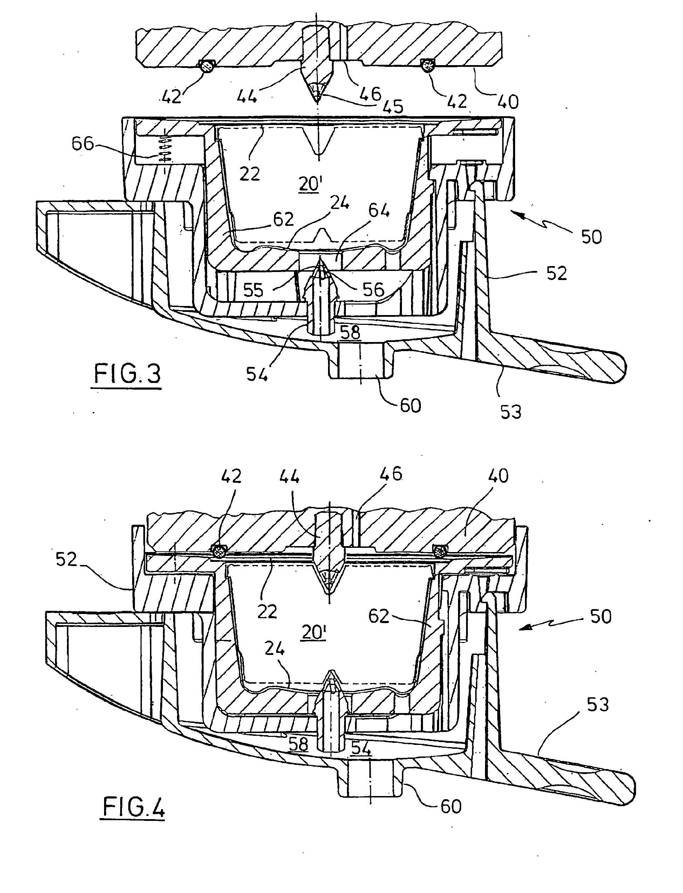

Die Kaffeemaschine 1 hat einen Portionskapselhalter 2 (bzw. 50, siehe die Figuren 3 und 4), in den eine Portionskapsel (siehe Figur 2) mit einer Getränkesubstanz (im Ausführungsbeispiel einer Kaffeesubstanz) eingesetzt werden kann. Wie weiter unten erläutert, werden dabei Öffnungen in der Portionskapsel geschaffen, sodass dort heißes Wasser eindringen und extrahiertes Getränk auslaufen können.

Im Betrieb der Kaffeemaschine 1 wird einem Wasservorrat 4 Wasser entnommen und über einen Durchflussmesser 5 mittels einer Pumpe 6 zu einem Boiler 8 gefördert. Im Ausführungsbeispiel ist die Pumpe 6 eine Kolbenpumpe, die relativ hohe Drücke (z.B. 14 bis 16 bar) aufbauen kann.

Der Boiler 8 ist als Durchlauferhitzer gestaltet und hat ein relativ großes Aufnahmevolumen (z.B. 100 ml), um größere Temperaturschwankungen zu vermeiden. Am Ausgang des Boilers 8 und über dem Portionskapselhalter 2 befindet sich ein Ventil 9, das bei einem relativ geringen Druck (z.B. 2 bar, weniger als der von der Pumpe 6 erzeugte Druck) öffnet und ein Nachtropfen verhindert, wenn die Pumpe 6 nicht in Betrieb ist.

Zum Steuern der Kaffeemaschine 1 dient eine Steuerung 10, die über Signal- bzw. Steuerleitungen mit dem Durchflussmesser 5, der Pumpe 6 und dem Boiler 8 verbunden ist.

Der Benutzer wählt in der Betriebsart zum Brühen eines heißen Kaffeegetränks den gewünschten Druck vor, was über eine Vorwahl der Leistung der Pumpe 6 geschieht. Beispielsweise eignen sich zum Brühen von Espresso Drücke von etwa 14 bis 16 bar, zum Brühen von Caffè Crema etwa 10 bis 12 bar und zum Brühen von Filterkaffee etwa 5 bis 7 bar. Dabei ist in den Portionskapselhalter 2 eine für das jeweilige Kaffeegetränk geeignete Portionskapsel eingesetzt.

Das Signal des Durchflussmessers 5 wird im Ausführungsbeispiel zum Regulieren des Volumenstroms des Druckwassers verwendet, wie auch eingangs erläutert. Denn Filterkaffee muss bei geringem Volumenstrom gebrüht werden, sonst schäumt er, während bei Caffè Crema gerade ein Aufschäumen erwünscht ist, weshalb in diesem Fall ein größerer Volumenstrom benutzt wird. Den höchsten Volumenstrom erfordert Espresso. Im Ausführungsbeispiel erfolgt für Espresso jedoch keine Regelung des Volumenstroms, sondern statt dessen geht der volle Druck der Pumpe 6 auf die Portionskapsel, und es stellt sich ein Volumenstrom in Abhängigkeit des Strömungswiderstands in der Portionskapsel ein, der wesentlich vom Mahlgrad der Kaffeesubstanz abhängt.

Das heiße Druckwasser durchläuft die Portionskapsel, und nach dem Austreten aus der Portionskapsel fließt das frisch gebrühte Kaffeegetränk in einen Behälter, der unterhalb des Portionskapselhalters 2 aufgestellt ist, z.B. in eine Tasse 11.

Neben der erläuterten Betriebsart, die zum Brühen verschiedenartiger heißer Kaffeegetränke dient und bei der im Boiler 8 eine Wassertemperatur von weniger als 100 °C erzeugt wird, ermöglicht die Kaffeemaschine 1 noch eine weitere Betriebsart. Dabei arbeitet die Pumpe 6 langsam und erzeugt nur einen geringen Überdruck. Der Boiler 8 wird über 100 °C aufgeheizt, sodass Wasserdampf entsteht, der über ein Dampfventil 12 aus einer Düse 14 austreten kann, die sich am Ende eines Rohrstücks befindet. Zum Steuern des Dampfes dient eine Betätigungseinrichtung 16. Wenn die Düse 14 z.B. in ein Gefäß mit Milch gehalten wird, schäumt die Milch auf und kann z.B. als Schaumkrone für ein kurz zuvor gebrühtes Kaffeegetränk dienen.

Es ist auch denkbar, Milchschaum mit Hilfe einer Portionskapsel herzustellen, die Milch enthält und in den Portionskapselhalter 2 eingesetzt ist. In diesem Fall wird Heißwasser oder Dampf über das Ventil 9 geleitet.

Um den von der Druckwassereinrichtung erzeugten Überdruck in der Kaffeemaschine 1 zu begrenzen, ist ein Sicherheitsventil 18 vorgesehen.

In Figur 2 ist in schematischem Längsschnitt eine Portionskapsel 20 dargestellt, wie sie im Prinzip aus der EP 1 344 722 A1 bekannt ist.

Die Portionskapsel 20, die im Ausführungsbeispiel einen kreisförmigen Querschnitt hat, weist einen Kapseldeckel 22, einen Kapselboden 24 und eine umlaufende Seitenwand 26 auf. Im Inneren der Portionskapsel 20 befindet sich im Ausführungsbeispiel Kaffeesubstanz 28, die auf das zu brühende Kaffeegetränk abgestimmt ist. Die Kaffeesubstanz 28 enthält Mahlkaffee, der z.B. zum Brühen von Espresso, Caffe Crema oder Filterkaffee geeignet ist.

Unter dem Kapseldeckel 22 ist eine Verteilereinrichtung 30 mit einer Vertiefung 31 und oberhalb des Kapselbodens 24 ist eine Sammeleinrichtung 32 mit einer Erhöhung 33 angeordnet. Die Kaffeesubstanz 28 befindet sich zwischen der. Verteilereinrichtung 30 und der Sammeleinrichtung 32. Die Verteilereinrichtung 30 und die Sammeleinrichtung 32 sind jeweils mit einer Anzahl von Öffnungen und Prägungen zur Bildung von Flüssigkeitskanälen versehen. Dadurch ermöglicht es die Verteilereinrichtung 30, dass zentral in die Portionskapsel 20 eindringendes heißes Wasser (siehe unten) weitgehend gleichmäßig in der Portionskapsel 20 verteilt wird, sodass die Kaffeesubstanz 28 im Wesentlichen gleichmäßig extrahiert wird. Das frisch gebrühte Kaffeegetränk sammelt sich an der Sammeleinrichtung 32 und wird mit deren Hilfe durch eine zentrale Öffnung im Kapselboden 24 nach außen geleitet (siehe unten). Die Gestaltung der Verteilereinrichtung 30 und/oder der Sammeleinrichtung 32 kann an die Art des zu brühenden Kaffeegetränks angepasst sein, z.B. um bei Caffè Crema die Schaumbildung zu verbessern.

In der speziellen Ausgestaltung der Portionskapsel 20 gemäß Figur 2 ist der Kapselboden 24 mit einer zentralen Öffnung 34 versehen, die mit einem an der Innenseite aufgesiegelten Folienstück 36 abgedeckt ist. Das Folienstück 36 bildet im Vergleich zu dem übrigen Kapselboden 24 eine Schwachstelle und kann daher leichter von einem Aufstechmittel durchdrungen werden. Ein Aufkleben des Folienstücks 36 oder ein Aufsiegeln bzw. Aufkleben an der Außenseite des Kapselbodens 24 ist ebenfalls denkbar. Portionskapseln 20 mit einer Schwachstelle am Kapselboden 24 eignen sich insbesondere zum Brühen von Filterkaffee oder Caffè Crema.

Die Portionskapsel 20 sowie das Folienstück 36 können z.B. aus Kunststoff- oder Aluminiumfolie gefertigt sein.

Während im Ausführungsbeispiel die Portionskapsel 20 mit Kaffeesubstanz 28 gefüllt ist, ist auch die Anwendung anderer Getränkesubstanzen denkbar, z.B. Tee, Schokolade, Instantsuppe, Milchpulver oder, wie bereits erwähnt, flüssige Milch.

Die Figuren 3 und 4 zeigen in detailliertem Längsschnitt eine Ausführungsform des Portionskapselhalters 2, hier mit 50 bezeichnet. Außerdem ist eine an der Kaffeemaschine 1 befindliche Anlagefläche 40 dargestellt, die von unten her zugänglich ist. Der Portionskapselhalter 50 kann mit Hilfe einer bewegbaren Halteeinrichtung, die in den Figuren nicht eingezeichnet ist, relativ zu der Anlagefläche 40 nach oben oder unten verschoben werden. In Figur 3 ist eine Ausgangsposition gezeigt, in der der Portionskapselhalter 50 noch nicht an der Anlagefläche 40 anliegt, sondern einen Abstand dazu hat. In Figur 4 ist der Brühzustand dargestellt, wenn der Portionskapselhalter 50 an der Anlagefläche 40 anliegt.

Der Portionskapselhalter 50 kann im Ausführungsbeispiel in der Ausgangsposition aus der erwähnten Halteeinrichtung entnommen werden, um eine Portionskapsel (hier mit 20' bezeichnet) einzusetzen, zu entnehmen oder um den Portionskapselhalter 50 bei Bedarf zu spülen. Im Brühzustand ist die Halteeinrichtung mit Hilfe eines Hebels arretiert.

Die. Anlagefläche 40 ist mit einer Ringnut versehen, in der eine umlaufende Dichtung 42 angeordnet ist. Die Dichtung 42 liegt im Brühzustand am Rand des Kapseldeckels 22 an, siehe Figur 4. Vom Zentrum der Dichtung 42 springt von der Anlagefläche 40 nach unten ein massiver Dorn 44 mit einer Spitze 45 vor. Daneben befindet sich ein Wasserzulauf 46, der über das Ventil 9 mit dem Boiler 8 in Verbindung steht.

Der Portionskapselhalter 50 weist eine Halterung 52 mit einem Griff 53 auf. Vom unteren Bereich der Halterung 52 ragt ein Hohldorn 54 mit einer Spitze 55 nach oben, in der sich mehrere Öffnungen 56 befinden. Der Hohldorn 54 mündet in einen Sammelraum 58, der das gebrühte Kaffeegetränk über einen Getränkeauslauf 60 nach außen abgeben kann, z.B. in eine unter den Portionskapselhalter 50 gestellte Tasse.

Die Halterung 52 führt einen Einsatz 62, der an der Halterung 52 nach oben bzw. unten bewegbar ist. Der untere Bereich des Einsatzes 62 ist mit einer Öffnung 64 versehen, die auf den Hohldorn 54 abgestimmt ist. Der Rand des Einsatzes 62 stützt sich über Schraubenfedern 66 an der Halterung 52 ab. Dadurch ist der Einsatz 62 in der Ausgangsposition gemäß Figur 3 relativ zu der Halterung 52 nach oben verschoben und schützt den Benutzer vor Verletzungen durch den Hohldorn 54.

Wenn der Portionskapselhalter 50 in die Brühposition gebracht wird, drückt die Anlagefläche 40 den Einsatz 62 nach unten, siehe Figur 4. Dabei dringt der Dorn 44 durch den Kapseldeckel 22 der in den Einsatz 62 eingesetzten Portionskapsel 20', während der Hohldorn 54 bei der Abwärtsbewegung des Einsatzes 62 den Kapselboden 24 durchdringt, siehe. Figur 4. Dies gilt für Portionskapseln mit einer Sollschwachstelle am Kapselboden 24 (z.B. für Filterkaffee oder Caffè Crema), während ein Kapselboden 24 ohne Sollschwachstelle (z.B. für Espresso) in diesem Stadium durch den Hohldorn 54 nur vorgeschädigt wird, siehe unten.

Nachdem in der Brühposition das Ventil 9 öffnet, gelangt unter Druck stehendes heißes Wasser durch den Wasserzulauf 46 und die von dem Dorn 44 geschaffene Öffnung im Kapseldeckel 22 ins Innere der Portionskapsel 20' und wird von der Verteilereinrichtung 30 in der Kaffeesubstanz 28 verteilt. Das fertige Kaffeegetränk wird von der Sammeleinrichtung 32 zu dem Hohldorn 54 geleitet und tritt über den Sammelraum 58 und den Getränkeauslauf 60 aus der Kaffeemaschine 1 aus.

Wie bereits erwähnt, sind bei der Portionskapsel 20' (für Filterkaffee oder Caffè Crema) sowohl der Kapseldeckel 22 als auch der Kapselboden 24 durchstoßen, wenn der Portionskapselhalter 50 die Brühposition gemäß Figur 4 erreicht hat. Bei einer Portionskapsel für Espresso hat der Kapselboden keine Sollschwachstelle und ist daher in der Brühposition des Portionskapselhalters 50 zunächst nur vorgeschädigt. Erst wenn nach dem Einleiten des heißen Wassers ein Druck im Innenraum der Portionskapsel aufgebaut wird, wölbt sich der Kapselboden soweit nach unten, dass die Spitze 55 des Hohldorns 54 den Kapselboden vollständig penetrieren kann. Bei dieser Ausgestaltung hat das heiße Wasser eine längere Verweilzeit im Inneren der Portionskapsel und es kommt dort zu einem Druckaufbau, was zu einer verbesserten Extraktion und zu Aromavorteilen führen kann.

## Patentansprüche

1. Kaffeemaschine,
die zum Brühen eines heißen Getränks, insbesondere Kaffeegetränks, mittels einer Portionskapsel (20; 20') mit einem Kapseldeckel (22) und einem Kapselboden (24) eingerichtet ist und eine Druckwassereinrichtung (4, 5, 6, 8),
einen Portionskapselhalter (2; 50) und eine Steuerung (10) aufweist,
wobei dem Portionskapselhalter (2; 50) zwei relativ zueinander bewegbare Aufstechmittel (44, 54) zugeordnet sind, die dazu eingerichtet sind, beim oder nach dem Einsetzen der Portionskapsel (20; 20') in den Portionskapselhalter (2; 50) den Kapseldeckel (22) sowie den Kapselboden (24) zu durchstoßen, so dass heißes Wasser durch den Kapseldeckel (22) in den Innenraum der Portionskapsel (20; 20') und Getränk durch den Kapselboden (24) aus der Portionskapsel (20; 20') gelangen kann,
**dadurch gekennzeichnet, dass** die Steuerung (10) zum Bereitstellen mindestens drei verschiedener Drücke für das Druckwasser eingerichtet ist.

2. Kaffeemaschine nach Anspruch 1, **dadurch gekennzeichnet, dass** die Steuerung (10) zum Bereitstellen von drei Drücken für das Druckwasser eingerichtet ist, die zum Brühen von Espresso, Caffè Crema sowie Filterkaffee vorgesehen sind.

3. Kaffeemaschine nach Anspruch 2, **dadurch gekennzeichnet, dass** die drei Drücke im Bereich von etwa 13 - 18 bar, etwa 9 - 13 bar bzw. etwa 3 - 9 bar liegen und vorzugsweise im Bereich von etwa 14 - 16 bar, etwa 10 - 12 bar bzw. etwa 5 - 7 bar.

4. Kaffeemaschine nach einem der Ansprüche 1 bis 3, **dadurch gekennzeichnet, dass** mindestens eines der beiden Aufstechmittel einen hohlen Dorn (54) mit einer Spitze (55) aufweist, die mit mindestens einer Öffnung (56) versehenen ist.

5. Kaffeemaschine nach einem der Ansprüche 1 bis 4, **dadurch gekennzeichnet, dass** jedes der beiden Aufstechmittel genau einen Dorn (44, 54) aufweist, der vorzugsweise bei eingesetzter Portionskapsel (20; 20') zentral in Bezug auf den Kapseldeckel (22) bzw. den Kapselboden (24) angeordnet ist.

6. Kaffeemaschine nach einem der Ansprüche 1 bis 5, **dadurch gekennzeichnet, dass** die Kaffeemaschine (1) eine Anlagefläche (40) aufweist, relativ zu der der Portionskapselhalter (50) bewegbar ist und von der vorzugsweise die dem Kapseldeckel (22) zugeordneten Aufstechmittel (44) vorstehen.

7. Kaffeemaschine nach Anspruch 6, **dadurch gekennzeichnet, dass** der Portionskapselhalter (50) von der übrigen Kaffeemaschine (1) abnehmbar ist und dass die Kaffeemaschine (1) vorzugsweise eine bewegbare Halteeinrichtung aufweist, die zur Aufnahme des Portionskapselhalters (50) eingerichtet ist und mit der der Portionskapselhalter (50) auf die Anlagefläche (40) zu bzw. von der Anlagefläche (40) weg bewegbar ist.

8. Kaffeemaschine nach einem der Ansprüche 1 bis 7, **dadurch gekennzeichnet, dass** die Kaffeemaschine (1) eine umlaufende Dichtung (42) aufweist, die bei eingesetzter Portipnskapsel (20; 20') an den Rand des Kapseldeckels (22) anlegbar ist.

9. Kaffeemaschine nach einem der Ansprüche 1 bis 8, **dadurch gekennzeichnet, dass** der Portionskapselhalter (50) einen zur Aufnahme einer Portionskapsel (20; 20') eingerichteten Einsatz (62) aufweist, der in einer Halterung (52) gegen Federdruck in Richtung auf das dem Kapselboden (24) zugeordnete Aufstechmittel (54) zu verschiebbar gelagert ist, wobei dieses Aufstechmittel (54) an der Halterung (52) befestigt ist.

10. Kaffeemaschine nach einem der Ansprüche 1 bis 9, **dadurch gekennzeichnet, dass** das dem Kapselboden (24) zugeordnete Aufstechmittel (54) dazu eingerichtet ist, den Kapselboden (24) erst nach dem Einsetzen der Portionskapsel (20; 20') bei einem Druckaufbau in der Portionskapsel (20; 20') zu durchstoßen.

11. Kaffeemaschine nach einem der Ansprüche 1 bis 10, **dadurch gekennzeichnet, dass** der Portionskapselhalter (50) einen Sammelraum (58) für aus der Portionskapsel (20; 20') austretendes Getränk aufweist, der mit einem Getränkeauslauf (60) verbunden ist.

12. System mit
- einer Kaffeemaschine nach Anspruch 1 und
- einer Portionskapsel (20; 20'),
mit einem Kapseldeckel (22) und einem Kapselboden (24), die im Lieferzustand allseitig geschlossen ist und eine partikelförmige, mittels Wasser extrahierbare Getränkesubstanz, vorzugsweise Kaffeesubstanz (28), enthält,
wobei zwischen Kapseldeckel (22) und Getränkesubstanz (28) eine Verteilereinrichtung (30) und/oder zwischen Getränkesubstanz (28) und Kapselboden (24) eine Sammeleinrichtung (32) angeordnet ist, die jeweils eine Anzahl von Öffnungen und vorzugsweise Prägungen zur Bildung von Flüssigkeitskanälen aufweisen.

13. System nach Anspruch 12, **dadurch gekennzeichnet, dass** die Steuerung (10) zum Bereitstellen von drei Drücken für das Druckwasser eingerichtet ist, die zum Brühen von Espresso, Caffè Crema sowie Filterkaffee vorgesehen sind.

14. Systems nach Anspruch 13, **dadurch gekennzeichnet, dass** die drei Drücke im Bereich von etwa 13 - 18 bar, etwa 9 - 13 bar bzw. etwa 3 - 9 bar liegen und vorzugsweise im Bereich von etwa 14 - 16 bar, etwa 10 - 12 bar bzw. etwa 5 - 7 bar.

15. System nach Anspruch 13 oder 14, **dadurch gekennzeichnet, dass** die Getränkesubstanz in der Portionskapsel (20; 20') eine Kaffeesubstanz (28) ist, die zum Brühen von Espresso oder Caffè Crema oder Filterkaffee vorgesehen ist, und dass optional weitere Substanzen in der Portionskapsel (20; 20') enthalten sind.

16. System nach Anspruch 13 oder 14, **dadurch gekennzeichnet, dass** die Getränkesubstanz in der Portionskapsel (20; 20') mindestens eine der folgenden Substanzen aufweist: Tee, Schokolade, Instantsuppe, Milchpulver, flüssige Milch.

17. System nach einem der Ansprüche 12 bis 16, **dadurch gekennzeichnet, dass** mindestens eines der beiden Aufstechmittel einen hohlen Dorn (54) mit einer Spitze (55) aufweist, die mit mindestens einer Öffnung (56) versehenen ist.

18. System nach einem der Ansprüche 12 bis 17, **dadurch gekennzeichnet, dass** jedes der beiden Aufstechmittel genau einen Dorn (44, 54) aufweist, der vorzugsweise bei eingesetzter Portionskapsel (20; 20') zentral in Bezug auf den Kapseldeckel (22) bzw. den Kapselboden (24) angeordnet ist.

19. System nach einem der Ansprüche 12 bis 18, **dadurch gekennzeichnet, dass** die Kaffeemaschine (1) eine Anlagefläche (40) aufweist, relativ zu der der Portionskapselhalter (50) bewegbar ist und von der vorzugsweise die dem Kapseldeckel (22) zugeordneten Aufstechmittel (44) vorstehen.

20. System nach Anspruch 19, **dadurch gekennzeichnet, dass** der Portionskapselhalter (50) von der übrigen Kaffeemaschine (1) abnehmbar ist und dass die Kaffeemaschine (1) vorzugsweise eine bewegbare Halteeinrichtung aufweist, die zur Aufnahme des Portionskapselhalters (50) eingerichtet ist und mit der der Portionskapselhalter (50) auf die Anlagefläche (40) zu bzw. von der Anlagefläche (40) weg bewegbar ist.

21. System nach einem der Ansprüche 12 bis 20, **dadurch gekennzeichnet, dass** die Kaffeemaschine (1) eine umlaufende Dichtung (42) aufweist, die bei eingesetzter Portionskapsel (20; 20') an den Rand des Kapseldeckels (22) anlegbar ist.

22. System nach einem der Ansprüche 12 bis 21, **dadurch gekennzeichnet, dass** der Portionskapselhalter (50) einen zur Aufnahme einer Portionskapsel (20; 20') eingerichteten Einsatz (62) aufweist, der in einer Halterung (52) gegen Federdruck in Richtung auf das dem Kapselboden (24) zugeordnete Aufstechmittel (54) zu verschiebbar gelagert ist, wobei dieses Aufstechmittel (54) an der Halterung (52) befestigt ist.

23. System nach einem der Ansprüche 12 bis 22, **dadurch gekennzeichnet, dass** das dem Kapselboden (24) zugeordnete Aufstechmittel (54) dazu eingerichtet ist, den Kapselboden (24) erst nach dem Einsetzen der Portionskapsel (20; 20') bei einem Druckaufbau in der Portionskapsel (20; 20') zu durchstoßen.

24. System nach einem der Ansprüche 12 bis 23, **dadurch gekennzeichnet, dass** der Portionskapselhalter (50) einen Sammelraum (58) für aus der Portionskapsel (20; 20') austretendes Getränk aufweist, der mit einem Getränkeauslauf (60) verbunden ist.

25. System nach einem der Ansprüche 12 bis 24, **dadurch gekennzeichnet, dass** der Kapselboden (24) der Portionskapsel (20) eine Sollschwachstelle (36) aufweist.

26. System nach Anspruch 25, **dadurch gekennzeichnet, dass** die Sollschwachstelle ein Folienstück (36) aufweist, das vorzugsweise im zentralen Bereich des Kapselbodens (24) angeordnet ist.

## Claims

1. A coffee machine
which is intended for brewing a hot beverage, in particular a coffee beverage, by means of a portion capsule (20; 20') with a capsule lid (22) and a capsule base (24) and which has a pressurized-water device (4, 5, 6, 8), a portion-capsule holder (2; 50) and a control means (10),
it being the case that the portion-capsule holder (2; 50) is assigned two piercing means (44, 54) which can be moved relative to one another and by means of which, during or after the operation of inserting the portion capsule (20; 20') into the portion-capsule holder (2; 50), the capsule lid (22) and the capsule base (24) can be pierced in order to allow hot water to pass through the capsule lid (22) into the interior of the portion capsule (20; 20') and beverage to pass out of the portion capsule (20; 20') through the capsule base (24),
**characterised in that** the control means (10) is intended for providing at least three different pressures for the pressurized water.

2. The coffee machine as claimed in claim 1, **characterised in that** the control means (10) is intended for providing three pressures for the pressurized water which are envisaged for brewing espresso, cafe crema and filter coffee.

3. The coffee machine as claimed in claim 2, **characterised in that** the three pressures are in the range of approximately 13-18 bar, approximately 9-13 bar and approximately 3-9 bar, respectively, and preferably in the range of approximately 14-16 bar, approximately 10-12 bar and approximately 5-7 bar, respectively.

4. The coffee machine as claimed in anyone of claims 1 to 3, **characterised in that** at least one of the two piercing means has a hollow spike (54) with a tip (55) which is provided with at least one opening (56).

5. The coffee machine as claimed in anyone of claims 1 to 4, **characterised in that** each of the two piercing means has precisely one spike (44, 54) which, preferably, is arranged centrally in relation to the capsule lid (22) and the capsule base (24) when the portion capsule (20; 20') is inserted.

6. The coffee machine as claimed in anyone of claims 1 to 5, **characterised in that** the coffee machine (1) has an abutment surface (40) relative to which the portion-capsule holder (50) can be moved and from which preferably the piercing means (44), which are assigned to the capsule lid (22), project.

7. The coffee machine as claimed in claim 6, **characterised in that** the portion-capsule holder (50) can be removed from the rest of the coffee machine (1), and **in that** the coffee machine (1) preferably has a movable retaining device which is intended for accommodating the portion-capsule holder (50) and by means of which the portion-capsule holder (50) can be moved toward the abutment surface (40) and away from the abutment surface (40).

8. The coffee machine as claimed in anyone of claims 1 to 7, **characterised in that** the coffee machine (1) has an all-round seal (42) which, when the portion capsule (20; 20') is inserted, can be positioned against the periphery of the capsule lid (22).

9. The coffee machine as claimed in anyone of claims 1 to 8, **characterised in that** the portion-capsule holder (50) has an insert (62) which is intended for accommodating a portion capsule (20; 20') and is mounted in a mount (52) such that it can be displaced, counter to spring pressure, in the direction of the piercing means (54), which are assigned to the capsule base (24), this piercing means (54) being fastened on the mount (52).

10. The coffee machine as claimed in anyone of claims 1 to 9, **characterised in that** the piercing means (54), which is assigned to the capsule base (24), is intended for piercing the capsule base (24) only once the portion capsule (20; 20') has been inserted, when a pressure builds up in the portion capsule (20; 20').

11. The coffee machine as claimed in anyone of claims 1 to 10, **characterised in that** the portion-capsule holder (50) has a collecting chamber (58) for beverage passing out of the portion capsule (20; 20'), the collecting chamber being connected to a beverage outflow (60).

12. A system comprising
- a coffee machine according to claim 1 and
- a portion capsule (20; 20')
having a capsule lid (22) and a capsule base (24), is closed on all sides in the state in which it is supplied and contains a particulate beverage substance, preferably coffee substance (28), which can be extracted by means of water,
it being the case that a distributor device (30) is arranged between the capsule lid (22) and beverage substance (28) and/or a collecting device (32) is arranged between the beverage substance (28) and capsule base (24), these devices each having a number of openings and preferably embossments for forming liquid channels.

13. The system as claimed in claim 12, **characterised in that** the control means (10) is intended for providing three pressures for the pressurized water which are envisaged for brewing espresso, cafe crema and filter coffee.

14. The system as claimed in claim 13, **characterised in that** the three pressures are in the range of approximately 13-18 bar, approximately 9-13 bar and approximately 3-9 bar, respectively, and preferably in the range of approximately 14-16 bar, approximately 10-12 bar and approximately 5-7 bar, respectively.

15. The system as claimed in claim 13 or 14, **characterised in that** the beverage substance in the portion capsule (20; 20') is a coffee substance (28) which is envisaged for brewing espresso or cafe crema or filter coffee, and **in that** optionally further substances are contained in the portion capsule (20; 20').

16. The system as claimed in claim 13 or 14, **characterised in that** the beverage substance in the portion capsule (20; 20') has at least one of the following substances: tea, chocolate, instant soup, milk powder, liquid milk.

17. The system as claimed in anyone of claims 12 to 16, **characterised in that** at least one of the two piercing means has a hollow spike (54) with a tip (55) which is provided with at least one opening (56).

18. The system as claimed in anyone of claims 12 to 17, **characterised in that** each of the two piercing means has precisely one spike (44, 54) which, preferably, is arranged centrally in relation to the capsule lid (22) and the capsule base (24) when the portion capsule (20; 20') is inserted.

19. The system as claimed in anyone of claims 12 to 18, **characterised in that** the coffee machine (1) has an abutment surface (40) relative to which the portion-capsule holder (50) can be moved and from which preferably the piercing means (44), which are assigned to the capsule lid (22), project.

20. The system as claimed in claim 19, **characterised in that** the portion-capsule holder (50) can be removed from the rest of the coffee machine (1), and **in that** the coffee machine (1) preferably has a movable retaining device which is intended for accommodating the portion-capsule holder (50) and by means of which the portion-capsule holder (50) can be moved toward the abutment surface (40) and away from the abutment surface (40).

21. The system as claimed in anyone of claims 12 to 20, **characterised in that** the coffee machine (1) has an all-round seal (42) which, when the portion capsule (20; 20') is inserted, can be positioned against the periphery of the capsule lid (22).

22. The system as claimed in anyone of claims 12 to 21, **characterised in that** the portion-capsule holder (50) has an insert (62) which is intended for accommodating a portion capsule (20; 20') and is mounted in a mount (52) such that it can be displaced, counter to spring pressure, in the direction of the piercing means (54), which are assigned to the capsule base (24), this piercing means (54) being fastened on the mount (52).

23. The system as claimed in anyone of claims 12 to 22, **characterised in that** the piercing means (54), which is assigned to the capsule base (24), is intended for piercing the capsule base (24) only once the portion capsule (20; 20') has been inserted, when a pressure builds up in the portion capsule (20; 20').

24. The system as claimed in anyone of claims 12 to 23, **characterised in that** the portion-capsule holder (50) has a collecting chamber (58) for beverage passing out of the portion capsule (20; 20'), the collecting chamber being connected to a beverage outflow (60).

25. The system as claimed in anyone of claims 12 to 24, **characterised in that** the capsule base (24) of the portion capsule (20) has a predetermined weakening location (36).

26. The system as claimed in claim 25, **characterised in that** the predetermined weakening location has a piece of film material (36), which is preferably arranged in the central region of the capsule base (24).

## Revendications

1. Machine à café,
qui est aménagée pour préparer une boisson chaude, en particulier une boisson à base de café, au moyen d'une capsule portionnée (20; 20') comprenant un couvercle de capsule (22) et un fond de capsule (24), et qui présente un dispositif d'eau sous pression (4, 5, 6, 8), un support de capsule portionnée (2; 50) et une commande (10),
dans laquelle il est affecté au support de capsule portionnée (2; 50) deux moyens de perçage (44, 54) déplaçables l'un par rapport à l'autre, qui sont aménagés pour transpercer, pendant ou après l'insertion de la capsule portionnée (20; 20') dans le support de capsule portionnée (2; 50), le couvercle de capsule (22) et le fond de capsule (24) de manière à faire parvenir de l'eau chaude à travers le couvercle de capsule (22) dans l'espace interne de la capsule portionnée (20; 20') et une boisson à travers le fond de capsule (24) depuis la capsule portionnée (20; 20'),
**caractérisée en ce que** la commande (10) est ajustée pour appliquer au moins trois pressions différentes pour l'eau sous pression.

2. Machine à café selon la revendication 1, **caractérisée en ce que** la commande (10) est ajustée pour appliquer trois pressions pour l'eau sous pression, qui sont prévues pour préparer un expresso, un café crème, ainsi qu'un café filtre.

3. Machine à café selon la revendication 2, **caractérisée en ce que** les trois pressions se situent dans la plage d'environ 13 à 18 bars, d'environ 9 à 13 bars ou d'environ 3 à 9 bars et, de préférence, dans la plage d'environ 14 à 16 bars, d'environ 10 à 12 bars ou d'environ 5 à 7 bars.

4. Machine à café selon l'une quelconque des revendications 1 à 3, **caractérisée en ce qu'**au moins l'un des deux moyens de perçage présente un poinçon creux (54) avec une pointe (55), qui est pourvue d'au moins une ouverture (56).

5. Machine à café selon l'une quelconque des revendications 1 à 4, **caractérisée en ce que** chacun des deux moyens de perçage présente exactement un poinçon (44, 54) qui est aménagé de préférence, lorsque la capsule portionnée (20; 20') est insérée, centralement par rapport au couvercle de capsule (22) ou au fond de capsule (24).

6. Machine à café selon l'une quelconque des revendications 1 à 5, **caractérisée en ce que** la machine à café (1) présente une surface d'appui (40), qui est mobile par rapport à celle du support de capsule portionnée (50) et de laquelle font saillie de préférence les moyens de perçage (44) affectés au couvercle de capsule (22).

7. Machine à café selon la revendication 6, **caractérisée en ce que** le support de capsule portionnée (50) peut être retiré du reste de la machine à café (1) et **en ce que** la machine à café (1) présente de préférence un dispositif de maintien mobile, qui est aménagé pour recevoir le support de capsule portionnée (50) et à l'aide duquel le support de capsule portionnée (50) peut être déplacé en direction de la surface d'appui (40) ou en être écarté.

8. Machine à café selon l'une quelconque des revendications 1 à 7, **caractérisée en ce que** la machine à café (1) présente un joint d'étanchéité périphérique (42) qui peut être appliqué sur le bord du couvercle de capsule (22) lorsque la capsule portionnée (20; 20') est insérée.

9. Machine à café selon l'une quelconque des revendications 1 à 8, **caractérisée en ce que** le support de capsule portionnée (50) présente un élément rapporté (62) aménagé pour recevoir une capsule portionnée (20; 20'), qui est monté de manière à pouvoir être déplacé dans un support (52) à l'encontre de la pression d'un ressort en direction du moyen de perçage (54) affecté au fond de capsule (24), ce moyen de perçage (54) étant fixé sur le support (52).

10. Machine à café selon l'une quelconque des revendications 1 à 9, **caractérisée en ce que** le moyen de perçage (54) affecté au fond de capsule (24) est aménagé pour transpercer le fond de capsule (24) juste après l'insertion de la capsule portionnée (20; 20') lors d'une mise sous pression dans la capsule portionnée (20; 20').

11. Machine à café selon l'une quelconque des revendications 1 à 10, **caractérisée en ce que** le support de capsule portionnée (50) présente un espace collecteur (58) pour la boisson sortant de la capsule portionnée (20; 20'), qui est relié à une sortie de boisson (60).

12. Système, comprenant :
- une machine à café selon la revendication 1 et
- une capsule portionnée (20; 20'),
comprenant un couvercle de capsule (22) et un fond de capsule (24), qui est fermée de tous côtés à la livraison et qui contient une substance de boisson, de préférence une substance à base de café (28), particulaire pouvant être extraite au moyen d'eau,
dans lequel on aménage un dispositif distributeur (30) entre le couvercle de capsule (22) et la substance de boisson (28) et/ou on aménage un dispositif collecteur (32) entre la substance de boisson (28) et le fond de capsule (24), qui présentent respectivement un certain nombre d'ouvertures et, de préférence, des empreintes pour former des canaux de liquide.

13. Système selon la revendication 12, **caractérisé en ce que** la commande (10) est aménagée pour appliquer trois pressions pour l'eau sous pression, qui sont prévues pour préparer un expresso, un café crème, ainsi qu'un café filtre.

14. Système selon la revendication 13, **caractérisé en ce que** les trois pressions se situent dans la plage d'environ 13 à 18 bars, d'environ 9 à 13 bars ou d'environ 3 à 9 bars et, de préférence, dans la plage d'environ 14 à 16 bars, d'environ 10 à 12 bars ou d'environ 5 à 7 bars.

15. Système selon la revendication 13 ou 14, **caractérisé en ce que** la substance de boisson dans la capsule portionnée (20; 20') est une substance à base de café (28), qui est prévue pour préparer un expresso, un café crème ou un café filtre, et **en ce que** d'autres substances sont contenues éventuellement dans la capsule portionnée (20; 20').

16. Système selon la revendication 13 ou 14, **caractérisé en ce que** la substance de boisson dans la capsule portionnée (20; 20') présente au moins l'une des substances suivantes : thé, chocolat, soupe instantanée, lait en poudre, lait liquide.

17. Système selon l'une quelconque des revendications 12 à 16, **caractérisé en ce qu'**au moins l'un des deux moyens de perçage présente un poinçon creux (54) avec une pointe (55), qui est pourvue d'au moins une ouverture (56).

18. Système selon l'une quelconque des revendications 12 à 17, **caractérisé en ce que** chacun des deux moyens de perçage présente exactement un poinçon (44, 54) qui est aménagé de préférence, lorsque la capsule portionnée (20; 20') est insérée, centralement par rapport au couvercle de capsule (22) ou au fond de capsule (24).

19. Système selon l'une quelconque des revendications 12 à 18, **caractérisé en ce que** la machine à café (1) présente une surface d'appui (40), qui est mobile par rapport à celle du support de capsule portionnée (50) et de laquelle font saillie de préférence les moyens de perçage (44) affectés au couvercle de capsule (22).

20. Système selon la revendication 19, **caractérisé en ce que** le support de capsule portionnée (50) peut être retiré du reste de la machine à café (1) et **en ce que** la machine à café (1) présente de préférence un dispositif de maintien mobile, qui est aménagé pour recevoir le support de capsule portionnée (50) et à l'aide duquel le support de capsule portionnée (50) peut êre déplacé en direction de la surface d'appui (40) ou en être écarté.

21. Système selon l'une quelconque des revendications 12 à 20, **caractérisé en ce que** la machine à café (1) présente un joint d'étanchéité périphérique (42) qui peut être appliqué sur le bord du couvercle de capsule (22) lorsque la capsule portionnée (20; 20') est insérée.

22. Système selon l'une quelconque des revendications 12 à 21, **caractérisé en ce que** le support de capsule portionnée (50) présente un élément rapporté (62) aménagé pour recevoir une capsule portionnée (20; 20'), qui est monté de manière à pouvoir être déplacé dans un support (52) à l'encontre de la pression d'un ressort en direction du moyen de perçage (54) affecté au fond de capsule (24), ce moyen de perçage (54) étant fixé sur le support (52).

23. Système selon l'une quelconque des revendications 12 à 22, **caractérisé en ce que** le moyen de perçage (54) affecté au fond de capsule (24) est aménagé pour transpercer le fond de capsule (24) juste après l'insertion de la capsule portionnée (20; 20') lors d'une mise sous pression dans la capsule portionnée (20; 20').

24. Système selon l'une quelconque des revendications 12 à 23, **caractérisé en ce que** le support de capsule portionnée (50) présente un espace collecteur (58) pour la boisson sortant de la capsule portionnée (20; 20'), qui est relié à une sortie de boisson (60).

25. Système selon l'une quelconque des revendications 12 à 24, **caractérisé en ce que** le fond de capsule (24) de la capsule portionnée (20) présente une zone de rupture théorique (36).

26. Système selon la revendication 25, **caractérisé en ce que** la zone de rupture théorique présente un élément de film (36) qui est disposé de préférence dans la zone centrale du fond de capsule (24).
